# EUROPÄISCHE PATENTSCHRIFT

(11) **EP 2 483 324 B1**
(45) Veröffentlichungstag und Bekanntmachung des Hinweises auf die Patenterteilung: **17.06.2015**
(21) Anmeldenummer: 10763601.1
(22) Anmeldetag: 18.09.2010
(51) Int. Cl.: C08G 18/38, C08G 18/65, C08K 5/26, C08G 18/48, C08G 18/18, C08G 18/40, C08G 18/64, C08G 18/66, C08G 101/00

(54) **VERFAHREN ZUR ERNIEDRIGUNG VON EMISSIONEN EINES POLYURETHANSCHAUMSTOFFES**
METHOD FOR LOWERING EMISSIONS OF A POLYURETHANE FOAM
PROCÉDÉ D'ABAISSEMENT DES NIVEAUX D'ÉMANATIONS D'UNE MOUSSE DE POLYURÉTHANE

(30) Priorität: 30.09.2009 DE 102009047846
(43) Veröffentlichungstag der Anmeldung: 08.08.2012
(73) Patentinhaber: Bayer Intellectual Property GmbH, 40789 Monheim (DE)
(72) Erfinder: HAAS, Peter, 42781 Haan (DE); JACOBS, Gundolf, 51503 Rösrath (DE); MEYER-AHRENS, Sven, 51375 Leverkusen (DE)
(74) Vertreter: BIP Patents
(86) Internationale Anmeldenummer: PCT/EP2010/005741
(87) Internationale Veröffentlichungsnummer: WO 2011/038846

(56) Entgegenhaltungen:
- EP-A1- 1 428 847
- US-A- 4 107 102
- US-A1- 2009 227 758

## Beschreibung

Es ist aus dem Stand der Technik bekannt, dass Polyurethanschaumstoffe Formaldehyd emittieren können, wobei diese Formaldehydemission im allgemeinen unerwünscht ist. Nachgewiesen werden diese Emissionen z.B. bei Messungen nach der VDA 275 (Flaschenmethode, 3h 60°C) oder auch nach der VDA 276 (Emissionskammerprüfung, 65°C). Diese Formaldehydemissionen können bereits bei frisch hergestellten Schaumstoffen auftreten und werden durch Alterungsprozesse, besonders Photooxidation, verstärkt.

In EP-A 1 428 847 wird ein Verfahren zur Erniedrigung von Formaldehydemissionen aus Polyurethanschaumstoffen durch Zugabe von Aminogruppen aufweisenden Polymeren beschrieben. So wird durch Zusatz von Polyvinylaminen der Formaldehydgehalt gemäß VDA 275 unter die Nachweisgrenze von 0,1 ppm gebracht. Nachteilig bei solchen funktionellen, insbesondere aminofunktionellen Zusätzen kann deren Einfluss auf die Aktivität des Rohstoffgemisches sein. Oft werden hierdurch Eigenschaften wie das Fliessverhalten oder aber auch die Offenzelligkeit berührt.

Aufgabe der vorliegenden Erfindung war es daher, ein Verfahren zur Herstellung von Polyurethanschaumstoffen zu entwickeln, welches zu Polyurethanschaumstoffen mit erniedrigter Formaldehydemission führt und wobei die Aktivität des Rohstoffgemisches nicht wesentlich beeinflusst wird und wobei die mechanischen Eigenschaften des resultierenden Schaumstoffes (insbesondere Druckverformungsrest und Feuchtalterungsverhalten) nicht negativ beeinflusst werden. In einer weiteren Ausführungsform der Erfindung sollen die resultierenden Schaumstoffe darüber hinaus ein niedriges Migrations- und Emissionsverhalten bezüglich der eingesetzten Aktivatoren und Additive aufweisen.

Es wurde nun überraschend gefunden, dass die oben genannte technische Aufgabe durch ein Herstellverfahren, in dem Verbindungen mit mindestens einer Semicarbazidgruppe eingesetzt werden, gelöst wird.

Gegenstand der vorliegenden Erfindung ist ein Verfahren zur Herstellung von Polyurethanschaumstoffen mit erniedrigter Formaldehydemission durch Umsetzung von
- A1: gegenüber Isocyanaten reaktionsfähigen Wasserstoffatomen aufweisenden Verbindungen mit einem Molekulargewicht von 400 - 15.000,
- A2: gegebenenfalls gegenüber Isocyanaten reaktionsfähigen Wasserstoffatomen aufweisenden Verbindungen mit einem Molekulargewicht von 62 - 399,
- A3: Wasser und/oder physikalischen Treibmittel,
- A4: ggf. Hilfs- und Zusatzstoffe wie
a) Katalysatoren,
b) oberflächenaktive Zusatzstoffe,
c) Pigmente oder Flammschutzmittel,
- A5: Verbindungen mit mindestens einer Semicarbazidgruppe
mit
- B: Di- oder Polyisocyanaten.

Die Einsatzmenge der erfindungsgemäßen Komponente A5 bezogen auf 100 Gew.-Teile der Komponenten A1 bis A4 beträgt 0,1 - 10Gew.-Teile, bevorzugt 0,2 - 5 Gew.-Teile.

Gegenstand der vorliegenden Erfindung ist insbesondere ein Verfahren zur Herstellung von Polyurethanschaumstoffen mit erniedrigter Formaldehydemission durch Umsetzung von Komponente A:
- A-1: 75 bis 99,5 Gew.-Teile, bevorzugt 89 bis 97,7 Gew.-Teile (bezogen auf die Summe der Gew.-Teile der Komponenten A1 bis A4) gegenüber Isocyanaten reaktionsfähigen Wasserstoffatomen aufweisenden Verbindungen mit einem Molekulargewicht von 400-15.000,
- A2: 0 bis 10 Gew.-Teile, bevorzugt 0,1 bis 2 Gew.-Teile (bezogen auf die Summe der Gew.-Teile der Komponenten A1 bis A4) gegenüber Isocyanaten reaktionsfähigen Wasserstoffatomen aufweisenden Verbindungen mit einem Molekulargewicht von 62-399,
- A3: 0,5 bis 25 Gew.-Teile, bevorzugt 2 bis 5 Gew.-Teile (bezogen auf die Summe der Gew.-Teile der Komponenten A1 bis A4) Wasser und/oder physikalische Treibmittel,
- A4: 0 bis 10 Gew.-Teile, bevorzugt 0,2 bis 4 Gew.-Teile (bezogen auf die Summe der Gew.-Teile der Komponenten A1 bis A4) Hilfs- und Zusatzstoffe wie
d) Katalysatoren,
e) oberflächenaktive Zusatzstoffe,
f) Pigmente oder Flammschutzmittel,
- A5: 0,1 - 10 Gew.-Teile, bevorzugt 0,2 - 7,5 Gew.-Teile (bezogen auf die Summe der Gew.-Teile der Komponenten A1 bis A4) Verbindungen mit mindestens einer Semicarbazidgruppe,
mit
Komponente B:
- B: Di- oder Polyisocyanaten,
wobei die Herstellung bei einer Kennzahl von 50 bis 250, bevorzugt 70 bis 130, besonders bevorzugt 75 bis 115 erfolgt, und
wobei alle Gewichtsteilangaben der Komponenten A1 bis A4 in der vorliegenden Anmeldung so normiert sind, dass die Summe der Gewichtsteile der Komponenten A1+A2+A3+A4 in der Zusammensetzung 100 ergibt.

Es wurde gefunden, dass Verbindungen mit mindestens einer Semicarbazidgruppe (Komponente A5) überraschenderweise als Formaldehydfänger wirken. Ein weiterer Gegenstand der Erfindung ist daher die Verwendung der Verbindungen mit mindestens einer Semicarbazidgruppe (Komponente A5) in Polyurethanzusammensetzungen oder in Verfahren zur Herstellung von Polyurethanschaumstoffen zur Erniedrigung der Formaldehydemission.

Die Herstellung von Schaumstoffen auf Isocyanatbasis ist an sich bekannt und z.B. in DE-A 1 694 142, DE-A 1 694 215 und DE-A I 720 768 sowie im Kunststoff-Handbuch Band VII, Polyurethane, herausgegeben von Vieweg und Höchtlein, Carl Hanser Verlag München 1966, sowie in der Neuauflage dieses Buches, herausgegeben von G. Oertel, Carl Hanser Verlag München, Wien 1993, beschrieben.

Es handelt sich dabei vorwiegend um Urethan- und/oder Uretdion- und/oder Harnstoff- und/oder Carbodiimidgruppen aufweisende Schaumstoffe. Die erfindungsgemäße Verwendung erfolgt vorzugsweise bei der Herstellung von Polyurethan- und Polyisocyanurat-Schaumstoffen.

Für die Herstellung der Schaumstoffe auf Isocyanatbasis können die nachfolgend näher beschriebenen Komponenten eingesetzt werden.

### Komponente A1

Ausgangskomponenten gemäß Komponente A1 sind Verbindungen mit mindestens zwei gegenüber Isocyanten reaktionsfähigen Wasserstoffatomen von einem Molekulargewicht in der Regel von 400 - 15.000. Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen speziell solche vom Molekulargewicht 1000 bis 6000, vorzugsweise 2000 bis 6000, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der EP-A 0 007 502, Seiten 8-15, beschrieben werden. Die mindestens zwei Hydroxylgruppen aufweisenden Polyether sind erfindungsgemäß bevorzugt.

### Komponente A2

Gegebenenfalls werden als Komponente A2 Verbindungen mit mindestens zwei gegenüber Isocyanaten reaktionsfähigen Wasserstoffatomen und einem Molekulargewicht von 32 bis 399 eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können als Komponente A2 Ethanolamin, Diethanolamin, Triethanolamin, Sorbit und/oder Glycerin eingesetzt werden. Weitere Beispiele für Verbindungen gemäß Komponente A2 werden in EP-A 0-007 502, Seiten 16 - 17, beschrieben.

### Komponente A3

Als Komponente A3 werden Wasser und/oder physikalische Treibmittel eingesetzt. Als physikalische Treibmittel werden beispielsweise Kohlendioxid und/oder leicht flüchtige organische Substanzen als Treibmittel eingesetzt.

### Komponente A4

Als Komponente A4 werden gegebenenfalls Hilfs- und Zusatzstoffe verwendet wie
a) Katalysatoren (Aktivatoren),
b) oberflächenaktive Zusatzstoffe (Tenside), wie Emulgatoren und Schaumstabilisatoren insbesodere solche mit niedriger Emission wie beispielsweise Produkte der Tegostab^{®} LF-Serie,
c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beilspielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt
α) Harnstoff, Derivate des Harnstoffs und/oder
β) Amine und Aminoether, welche jeweils eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen.

Als Beispiele für besonders bevorzugte Katalysatoren seien genannt: (3-Dimethylaminopropylarnin)-Harnstoff, 2-(2-Dimethylaminoethoxy)ethanol, N,N-Bis(3-dimethyl-aminopropyl)-N-isopropanolamin, N,N,N-Trimethyl-N-hydroxyethyl-bisaminoethylether und 3-Dimethylaminopropylamin.

### Komponente A5

Bei den Verbindungen gemäß Komponente A5 handelt es sich um Verbindungen mit mindestens einer Semicarbazidgruppe, d.h. das in der nachfolgenden Formel (I) gezeigte Strukturelement aufweisen, 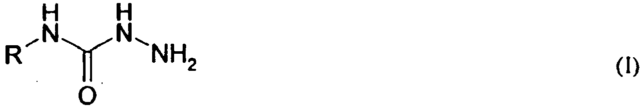 wobei R ein Alkyl-, ein Alkyaryl- oder ein Aryl - Rest ist, der selbst wiederum eine Semicarbazidgruppe und/oder andere funktionelle Gruppen aufweisen oder substituiert sein kann. Unter andere funktionelle Gruppen sind im Sinne der Erfindung beispielsweise eine Hydrazongruppe, eine Estergruppe, eine Harnstoffgruppe, eine Urethangruppe, eine Anhydridgruppe zu verstehen. Unter einem substituierten Alkyl-, ein Alkyaryl- oder ein Aryl-Rest im Sinne der Erfindung ist zu verstehen, dass der Rest R auch Heteroatome wie beispielsweise Halogenatome, Phosphoratome, Schwefelatome enthalten kann und auch mit Alkyl- oder Arylgruppen verzweigt sein kann.

Ein Alkylrest ist bevorzugt C₁ bis C₃₀-Alkyl, besonders bevorzugt C₄ bis C₁₆-Alkyl, der linear oder verzweigt sein kann. Ein Arylrest ist bevorzugt Phenyl, der auch durch Alkyl substituiert sein kann. Ein Alkarylrest enthält Alkyl- und Aryl-Reste.

Als Verbindungen mit mindestens einer Semicarbazidgruppe (Komponente A5) seien beispielhaft I und bevorzugt die Verbindungen gemäß Formeln (II) bis (IX) aufgeführt. 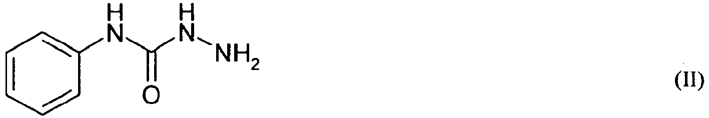 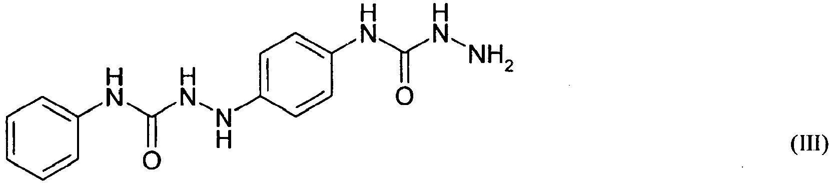 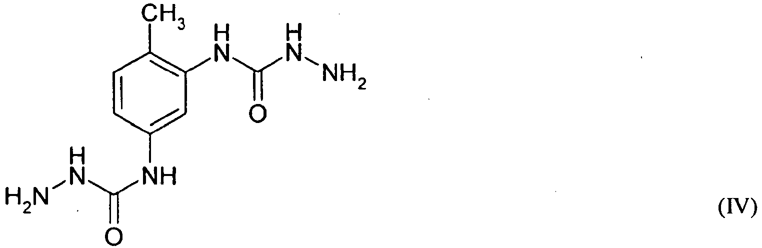 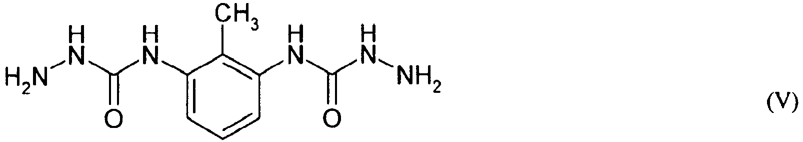 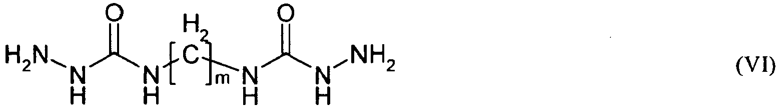 wobei in Formel (VI) m eine ganze Zahl von 1 bis 16, bevorzugt von 6 bis 12, besonders bevorzugt 6 oder 12 ist.

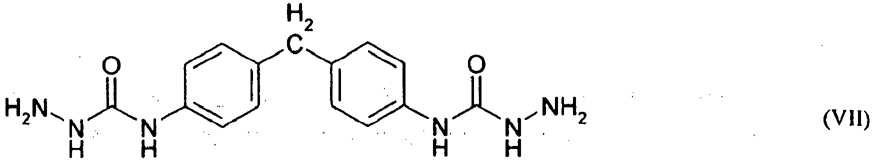

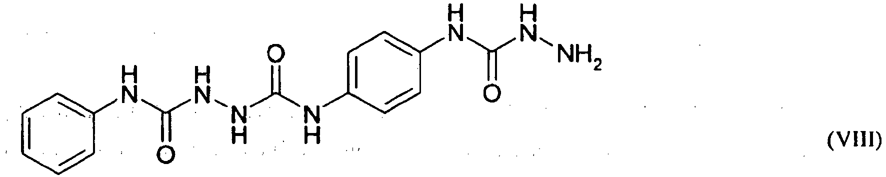

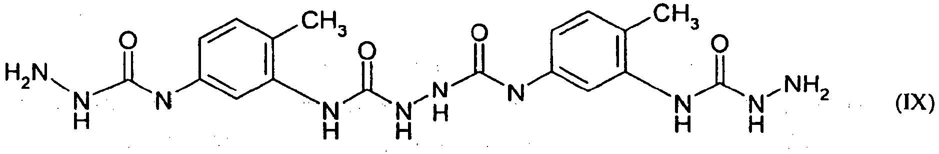

Unter Verbindungen mit mindestens einer Semicarbazidgruppe (Komponente A5) sind im Sinne der Erfindung auch Verbindungen mit einer oligomeren oder polymeren Struktur ("Polyhydrazodicarbonamide") zu verstehen, wie exemplarisch in Formel (X) dargestellt, 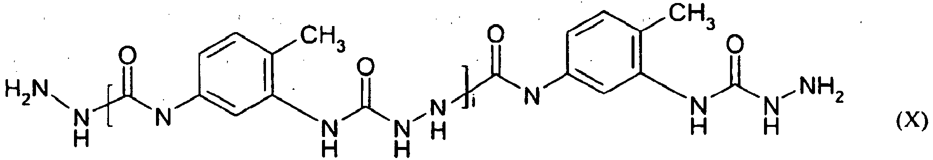 wobei in Formel (X) i eine ganze Zahl von 2 bis 100000, bevorzugt von 1000 bis 50000, besonders bevorzugt von 5000 bis 25000 ist.

Die Verbindungen gemäß Komponente A5 lassen sich beispielsweise durch Umsetzung von den zugrundeliegenden Isocyanaten mit Hydrazin nach den dem Fachmann bekannten Verfahren herstellen, wie exemplarisch im experimentellen Teil der vorliegenden Erfindung oder in Mihail Ionescu: "Chemistry and Technology of Polyols for Polyurethanes", Rapra Technology, Shawbury, Shrewsbury, Shropshire, 2005 auf den Seiten 215 bis 219 ausgeführt.

### Komponente B

Als Komponente B werden aliphatische, cycloaliphatische, aratiphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (V)

Q(NCO)ₙ (V)

in der
n = 2 - 4, vorzugsweise 2 -3,
und
- Q: einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7-8, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Komponente B mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenyl-polymethylenpolyisocyanat ("Mehrkern-MDI") eingesetzt.

### Durchführung des Verfahrens zur Herstellung von Polyurethanschaumstoffen:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die PUR-Schaumstoffe können als Form- oder auch als Blockschaumstoffe hergestellt werden.

Die Formschaumstoffe können heiß- oder auch kalthärtend hergestellt werden.

Gegenstand der Erfindung sind daher ein Verfahren zur Herstellung der Polyurethanschaumstoffe, die nach diesem Verfahren hergestellten Polyurethanschaumstoffe und deren Verwendung zur Herstellung von Formteilen sowie die Förmteile selbst.

Die nach der Erfindung erhältlichen Polyurethanschaumstoffe finden beispielsweise folgende Anwendung: Möbelpolsterungen, Textileinlagen, Matratzen, Automobilsitze, Kopfstützen, Armlehnen, Schwämme und Bauelemente, sowie Sitz- und Armaturverkleidungen.

### Beispiele

### Beschreibung der Rohstoffe

### Komponente A1-1:

Polyetherpolyol der OH-Zahl 28, hergestellt durch Addition von Propylenoxid und Ethylenoxid im Verhältnis 86,2 zu 13,8 % unter Verwendung von Glycerin als Starter mit mindestens 80 % primären OH-Gruppen.

### Komponente A1-2:

Polyetherpolyol der OH-Zahl 37, hergestellt durch Addition von Ethylenoxid und Propylenoxid im Verhältnis von 72,5 % und 27,5 % unter Verwendung von Glycerin als Starter mit mindestens 80 % primären OH-Gruppen.

### Komponente A2-1: Diethanolamin

### Komponente A3-1: Wasser

### Komponente A4:

### Komponente A4-1:

Stabilisator Tegostab^{®} B 8734 LF (Degussa-Goldschmidt).

### Komponente A4-2:

Aktivator Jeffcat^{®} ZR 50 (Huntsman); ein Amin enthaltend eine funktionelle Gruppe, die mit dem Isocyanat chemisch reagiert.

### Komponente A4-3:

Aktivator Dabco^{®} NE 300 (Air Products); enthält ein Harnstoff-Derivat.

### Komponente A5-1:

Phenylsemicarbazid

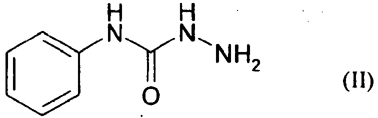

### Komponente A5-2:

Toluylen-bis-semicarbazid, Gemisch des 2,4- Isomers (IV) und des 2,6-Isomers (V) im Verhältni-80 : 20.

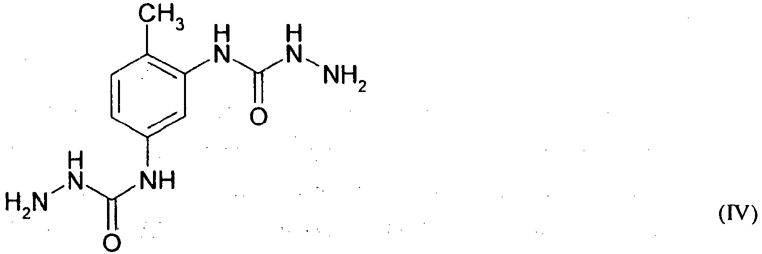

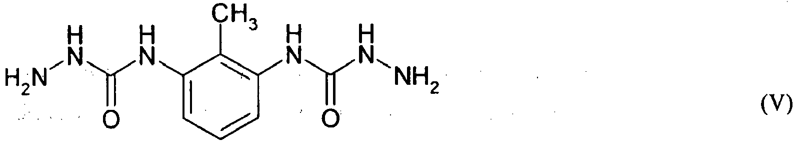

### Herstellung der Komponente A5-2:

In eine Lösung von 100 g einer 35%igen wässrigen Hydrazin-Lösung und 1000 ml Tetrahydrofuran wurden bei Raumtemperatur (21 °C) 92,5 g eines Gemisches aus 80 % 2,4-Toluylendiisocynat und 20 % 2,6-Toluylendiisocynat zugetropft. Anschließend wurde das resultierende Gemisch auf 40°C erwärmt und für 2 Stunden bei 40°C gehalten. Danach wurde das Gemisch auf 10°C abgekühlt und die überstehende Phase enthaltend das organische Lösemittel Tetrahydrofuran abdekandiert. Zur verbleibenden wässrigen Phase wurden 500 ml Methanol zugefügt. Bei Raumtemperatur wurde dieses Gemisch 15 Stunden gerührt, anschließend wurde der erhaltene feinkristalline Niederschlag abfiltriert und dann wurde der erhaltene feinkristalline Niederschlag im Vakuum getrocknet. Es wurde 101 g feinkristallines Pulver erhalten.
OH-Zahl gemessen: 400 mg KOH / g

### Komponente A5-3:

Polyhydrazodicarbonamid, eingesetzt als Dispersion in einem Polyetherpolyol, wobei die Dispersion 20 Gew.-% Polyhydrazodicarbonamid enthielt. Die Dispersion des Polyhydrazodicarbonamids wurde hergestellt, indem in einem Polyetherpolyol durch Umsetzung von Toluylendiisocyanat (Gemisch des 2,4- Isomers und des 2,6-Isomers im Verhältnis 80 : 20) mit Hydrazin.

### Komponente B-1

Isocyanatgemisch ("MDI") enthaltend 57 Gew.-% 4,4'-Diphenylmethandiisocyanat, 25 Gew.-% 2,4'-Diphenylmethandiisocyanat und 18 Gew.-% Polyphenylpolymethylenpolyisocyanat ("Mehrkern-MDI").

### Herstellung der Formteile

Unter den für die Herstellung von PUR-Schaumstoffen üblichen Verarbeitungsbedingungen der Rohstoffvermischung bei Raumtemperatur über einen Hochdruckmischkopf werden gemäß Rezepturaufbau die Ausgangskomponenten in eine auf 60°C geheizte Form des Volumens 12,5 L eingebracht und nach 4 min. entformt. Die Einsatzmenge der Rohstoffe wurde so gewählt, dass eine berechnete Formteildichte von 55 kg/m3 resultiert. In der Tabelle I angegeben ist die tatsächlich erhaltene Formteildichte, welche durch Wiegen des Stauchhärte-Prüfkörpers bestimmt wurde.

Die Kennzahl (Isocyanat Index) gibt das prozentuale Verhältnis der tatsächlich eingesetzten Isocyanat-Menge zur stöchiometrischen, d.h. berechneten Isocyanat-Gruppen (NCO)-Menge an:

Kennzahl = [(Isocyanat-Menge eingesetzt) : (Isocyanat-Menge berechnet)] • 100 (VI)

Die Stauchhärte wurde bestimmt gemäß DIN EN ISO 3386-1-98.

Die Druckverformungsreste DVR 50% und DVR 75% wurden bestimmt gemäß DIN EN ISO 1856-2001-03 bei 50% bzw. 75% Verformung.

Der Formaldehydgehalt wurde in Anlehnung an der von BMW Methode AA-C291 durchgeführt, wobei abweichend von dieser Methode (a) eckige Glasflaschen an Stelle von runden Polyethylenflaschen eingesetzt wurden, (b) der verwendete Prüfkörper eine Dicke von 1 cm (an Stelle von 4 mm) aufwies, (c) ein Kalibrierstandard der Firma Cerilliant eingesetzt wurde und (d) der Feuchtegehalt der Probe nicht ermittelt wurde.

Der Druckverformungsrest bei 70% Verformung nach Feuchtwärmelagerung, (FWL) d.h. 22 Stunden bei 40°C und 95% rel. Feuchte (DVR 70% nach FWL) wurde gemäß DIN EN ISO 1856-2001-03 bestimmt.

### Ergebnisse

Der gemäß BMW-Test zur Bestimmung der Emission von Aldehyden aus polymeren Werkstoffen und Formteilen mittels HPLC PA-C325 ermittelte Wert an Formaldehyd wird durch die erfindungsgemäße Verbindung nach Beispiel 2 (4-Phenylsemicarbazid) auf 0,3 ppm erniedrigt, während der Vergleich in Beispiel 1 einen Formaldehydgehalt von 2,4 ppm aufweist. Die erfindungsgemäßen Beispiele 3 bis 5 zeigen, dass auch die Verbindungen der Komponenten A5-2 und A5-3 den mittels HPLC PA-C325 ermittelte Wert an Formaldehyd überraschenderweise erniedrigen.

**Tabelle 1: Zusammensetzungen und Eigenschaften der resultierenden Formteile**

| Komponenten [Gew.-Teile] | **1** (Vergleich) | **2** | **3** | **4** | **5** |
|---|---|---|---|---|---|
| A. Polyolformulierung | | | | | |
| A1-1 | 97,0 | 97,0 | 97,0 | 87,0 | 47,0 |
| A1-2 | 3,0 | 3,0 | 3,0 | 3,0 | 3,0 |
| A2-1 (Diethanolamin) | 1,0 | 1,0 | 10 | 1,0 | 1,0 |
| A3-1 (Wasser) | 3,2 | 3,2 | 3,2 | 3,2 | 3,2 |
| A4-1 | 0,9 | 0,9 | 0,9 | 0,9 | 0,9 |
| A4-2 | 0,4 | 0,4 | 0,4 | 0,4 | 0,4 |
| A4-3 | 0,1 | 0,1 | 0,1 | 0,1 | 0,1 |
| A5-1 | - | 2,0 | - | - | - |
| A5-2 | - | - | 5,0 | | |
| A5-3¹⁾ | - | - | | 10,0 | 50,0 |

| B. Isocyanat | | | | | |
|---|---|---|---|---|---|
| B-1 bezogen auf 100 Gew.-Teile Polyolformulierung [Gew.-Teile] | 53,1 | 52,12 | 50,7 | 53,1 | 53,1 |
| Index | 95 | 95 | 95 | 95 | 95 |
| **Eigenschaften** | | | | | |
| Rohdichte [kg/m³] | 55,0 | 55,0 | 53 | 56 | 55 |
| Formaldehydgehalt nach BMW-Test gemäß PA-C325 [ppm] | 2,4 | 0,3 | 0,8 | 0,4 | 0,1 |
| Stauchhärte [kPa] | 6,0 | 6,3 | 5,2. | 6,8 | 8,1. |
| DVR 50% [%] | 6,4 | 5,6 | 9,2. | 5,4 | 5,6 |
| DVR 75% [%] | 8,6 | 8,0 | 12,4 | 7,4 | 8,3 |
| DVR 70% nach FWL [%] | 15,3 | 14,3 | 19,0 | 15,1 | 15,6 |

| | | | | | |
|---|---|---|---|---|---|
| n.g. = nicht gemessen 1) Angegeben ist die Menge (Gew.-Tle) der eingesetzten Dispersion, welche 20 Gew.-% an Polyhydrazodicarbonamid enthielt. Somit wurde in der Polyolformulierung gemäß Beispiel 4 effektiv eine Menge an 2,0 Gew-Tle Polyhydrazodicarbonamid bzw. in Beispiel 5 eine Menge an 10,0 Gew.-Tle Polyhydrazodicarbonamid eingesetzt. | | | | | |

## Patentansprüche

1. Verfahren zur Herstellung von Polyurethanschaumstoffen mit erniedrigter Formaldehydemission durch Umsetzung von
A 1 gegenüber Isocyanaten reaktionsfähigen Wasserstoffatomen aufweisenden Verbindungen mit einem Molekulargewicht von 400 - 15.000,
A2 gegebenenfalls gegenüber Isocyanaten reaktionsfähigen Wasserstoffatomen aufweisenden Verbindungen mit einem Molekulargewicht von 62 - 399,
A3 Wasser und/oder physikalischen Treibmittel,
A4 ggf. Hilfs- und Zusatzstoffe,
A5 Verbindungen mit mindestens einer Semicarbazidgruppe,
mit
B Di- oder Polyisocyanaten.

2. Verfahren gemäß Anspruch 1, wobei die Einsatzmenge der Komponente A5 bezogen auf 100 Gew.-Teile der Komponenten A1 bis A4 0,1 - 10 Gew.-Teile beträgt.

3. Verfahren gemäß Anspruch 1 zur Herstellung von Polyurethanschaumstoffen mit erniedrigter Formaldehydemission durch Umsetzung von
Komponente A enthaltend
A1 75 bis 99,5 Gew.-Teile (bezogen auf die Summe der Gew.-Teile der Komponenten A1 bis A4) gegenüber Isocyantanen reaktionsfähigen Wasserstoffatomen aufweisenden Verbindungen mit einem Molekulargewicht von 400 - 15.000,
A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einem Molekulargewicht von 62 - 399,
A3 0,5 bis 25 Gew.-Teile (bezogen auf die Summe der Gew.-Teile der Komponenten A1 bis A4) Wasser und/oder physikalische Treibmittel,
A4 0 bis 10 Gew.-Teile (bezogen auf die Summe der Gew.-Teile der Komponenten A1 bis A4) Hilfs- und Zusatzstoffe wie
A5 0,1 - 10 Gew.-Teile (bezogen auf die Summe der Gew.-Teile der Komponenten A1 bis A4) Verbindungen mit mindestens einer Semicarbazidgruppe,
mit Komponente B enthaltend Di- oder Polyisocyanaten,
wobei die Herstellung bei einer Kennzahl von 50 bis 250 erfolgt.

4. Verfahren gemäß einem der Ansprüche 1 bis 3, wobei als Hilfs- und Zusatzstoffe (Komponente A4)
a) Katalysatoren,
b) oberflächenaktive Zusatzstoffe (Tenside), und
c) Additive wie Reaktionsverzögerer, Zellregler, Pigmente, Farbstoffe, Flammschutzmittel, Stabilisatoren gegen Alterungs- und Witterungseinflüsse, Weichmacher, fungistatisch und bakteriostatisch wirkende Substanzen, Füllstoffe und Trennmittel.

5. Verfahren gemäß einem der Ansprüche 1 bis 4, wobei als Katalysatoren
a) Harnstoff, die oben genannten Derivate des Harnstoffs und/oder
b) sowie aliphatische tertiäre Amine, cycloaliphatische tertiäre Amine, aliphatische Aminoether, cycloaliphatische Aminoether, **dadurch gekennzeichnet, dass** die Amine und Aminoether eine funktionelle Gruppe enthalten, die mit dem Isocyanat chemisch reagiert.

6. Verwendung der Verbindungen mit mindestens einer Semicarbazidgruppe (Komponente A5) in Polyurethanzusammensetzungen oder in Verfahren zur Herstellung von Polyurethanschaumstoffen zur Erniedrigung der Formaldehydemission.

7. Verfahren gemäß einem der Ansprüche 1 bis 5, **dadurch gekennzeichnet**, als Verbindungen mit mindestens einer Semicarbazidgruppe (Komponente A5) mindestens eine der Verbindungen gemäß Formeln (II) bis (X) 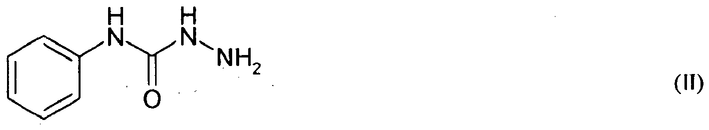 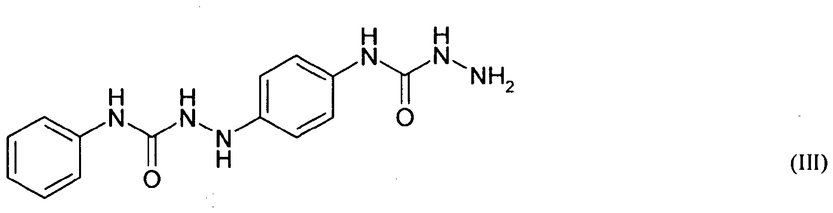 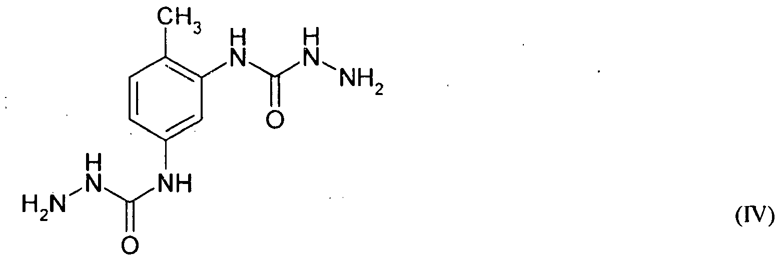 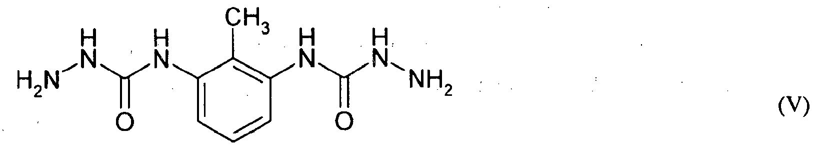 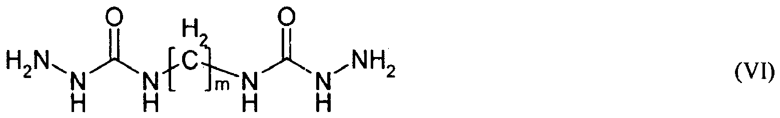 wobei in Formel (VI) m eine ganze Zahl von 1 bis 16, bedeutet, 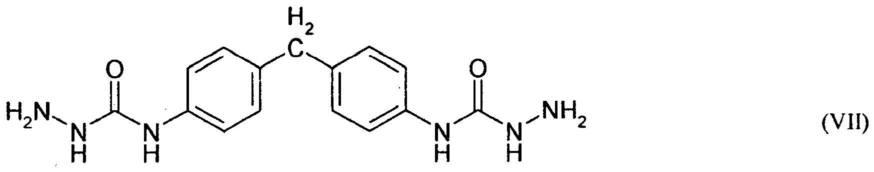 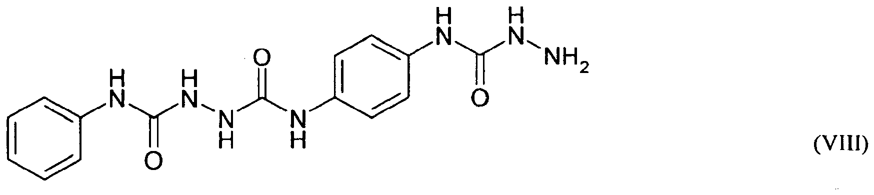 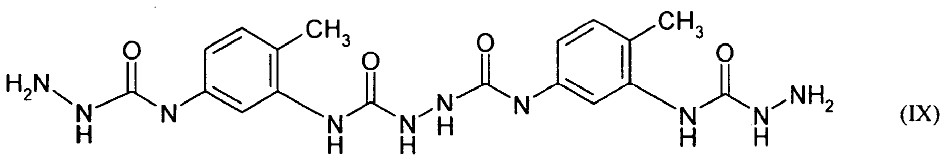 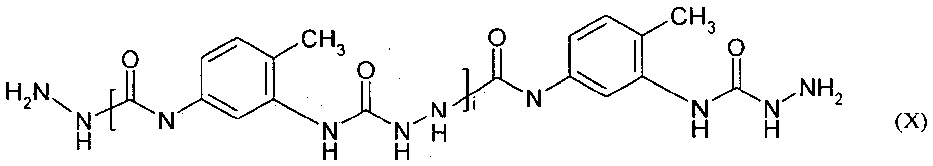 wobei in Formel (X) i eine ganze Zahl von 2 bis 100000bedeutet,
eingesetzt werden.

8. Verwendung gemäß Anspruch 6, **dadurch gekennzeichnet, dass** als Verbindungen mit mindestens einer Semicarbazidgruppe (Komponente A5) mindestens eine der Verbindungen gemäß Formeln (II) bis (X) 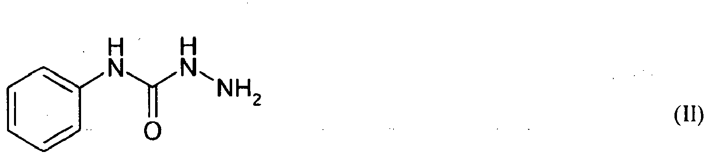 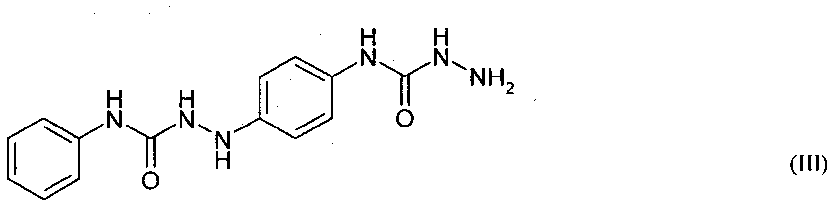 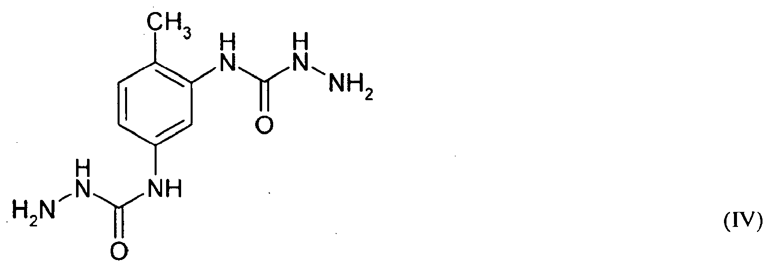 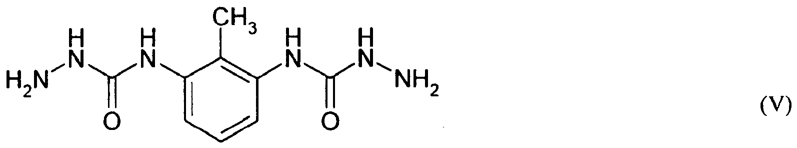 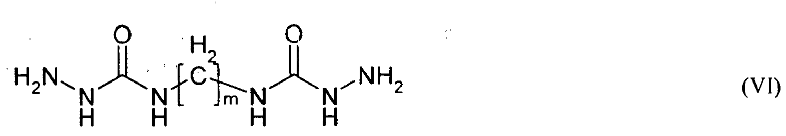 wobei in Formel (VI) m eine ganze Zahl von 1 bis 16 bedeutet, 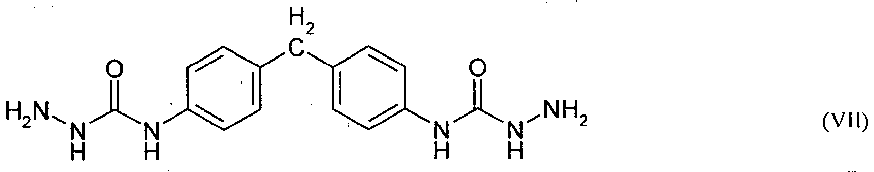 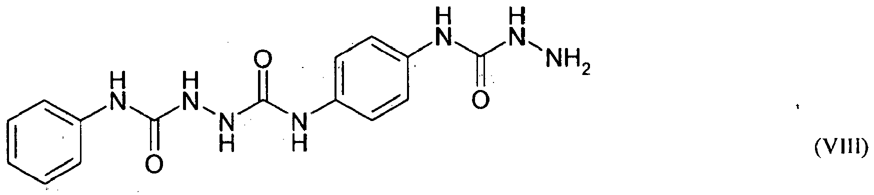 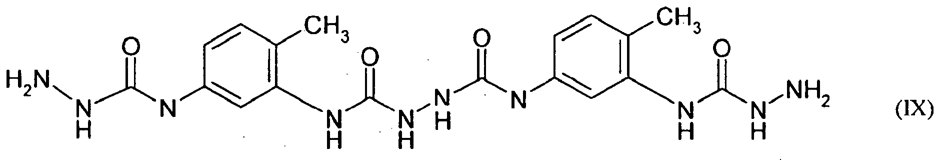 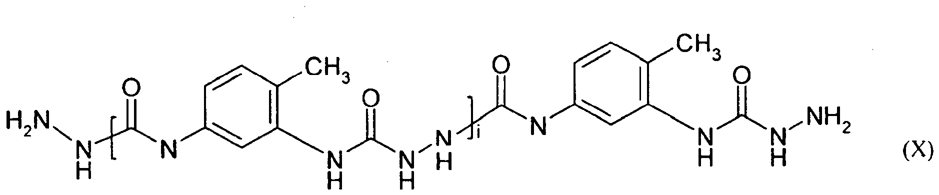 wobei in Formel (X) i eine ganze Zahl von 2 bis 100000 bedeutet,
eingesetzt werden.

## Claims

1. Process for the production of polyurethane foams with reduced formaldehyde emission by
reaction of
A1 compounds containing isocyanate-reactive hydrogen atoms and having a molecular weight of from 400 to 15,000,
A2 optionally compounds containing isocyanate-reactive hydrogen atoms and having a molecular weight of from 62 to 399,
A3 water and/or physical foaming agents,
A4 optionally auxiliary substances and additives,
A5 compounds having at least one semicarbazide group
with
B di- or poly-isocyanates.

2. Process according to claim 1, wherein the amount of component A5 that is used, based on 100 parts by weight of components A1 to A4, is from 0.1 to 10 parts by weight.

3. Process according to claim 1 for the production of polyurethane foams with reduced formaldehyde emission by reaction of
component A containing
A1 from 75 to 99.5 parts by weight (based on the sum of the parts by weight of components A1 to A4) of compounds containing isocyanate-reactive hydrogen atoms and having a molecular weight of from 400 to 15,000,
A2 from 0 to 10 parts by weight (based on the sum of the parts by weight of components A1 to A4) of compounds containing isocyanate-reactive hydrogen atoms and having a molecular weight of from 62 to 399,
A3 from 0.5 to 25 parts by weight (based on the sum of the parts by weight of components A1 to A4) of water and/or physical foaming agents,
A4 from 0 to 10 parts by weight (based on the sum of the parts by weight of components A1 to A4) of auxiliary substances and additives,
A5 from 0.1 to 10 parts by weight (based on the sum of the parts by weight of components A1 to A4) of compounds having at least one semicarbazide group
with component B containing di- or poly-isocyanates,
wherein the production is carried out at an index of from 50 to 250.

4. Process according to any one of claims 1 to 3, wherein there are used as auxiliary substances and additives (component A4)
a) catalysts,
b) surface-active additives (surfactants), and
c) additives such as reaction retardants, cell regulators, pigments, colourings, flame retardants, stabilisers against the effects of ageing and weathering, plasticisers, substances having fungistatic and bacteriostatic action, fillers and release agents.

5. Process according to any one of claims 1 to 4, wherein there are used as catalysts
a) urea, the above-mentioned derivatives of urea and/or
b) as well as aliphatic tertiary amines, cycloaliphatic tertiary amines, aliphatic amino ethers, cycloaliphatic amino ethers, **characterised in that** the amines and amino ethers contain a functional group which reacts chemically with the isocyanate.

6. Use of compounds having at least one semicarbazide group (component A5) in polyurethane compositions or in processes for the production of polyurethane foams for reducing the formaldehyde emission.

7. Process according to any one of claims 1 to 5, **characterised in that** there are used as compounds having at least one semicarbazide group (component A5) at least one of the compounds according to formulae (II) to (X) 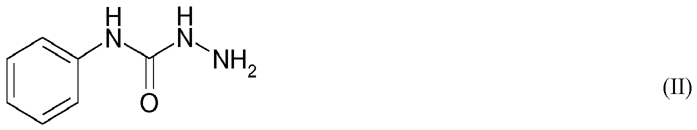 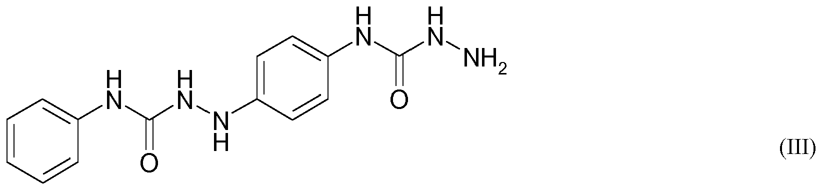 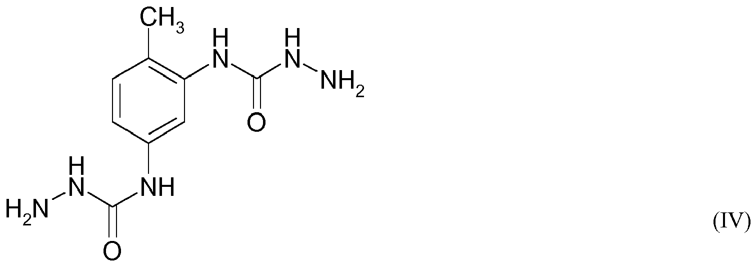 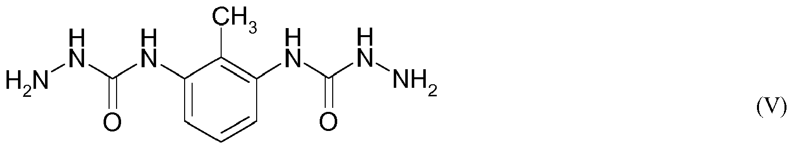 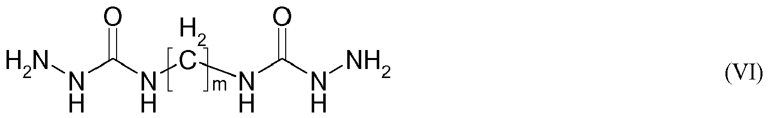 wherein in formula (VI) m denotes an integer from 1 to 16, 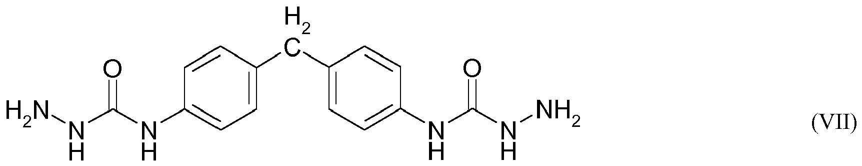 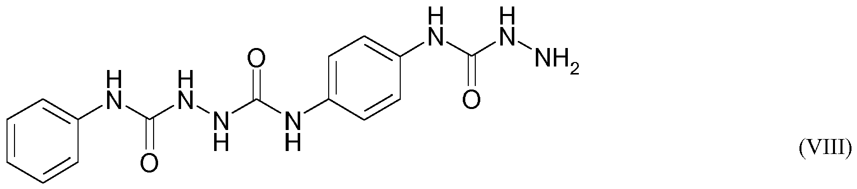 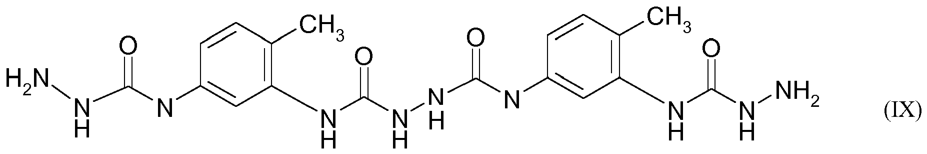 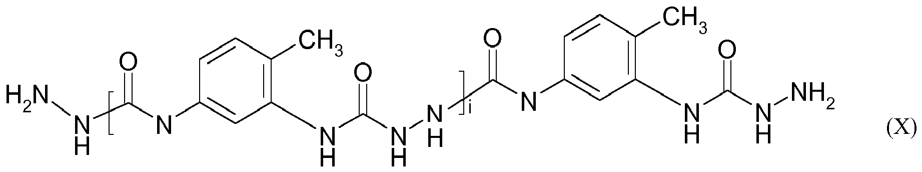 wherein in formula (X) i denotes an integer from 2 to 100,000.

8. Use according to claims 6, **characterised in that** there are used as compounds having at least one semicarbazide group (component A5) at least one of the compounds according to formulae (II) to (X) 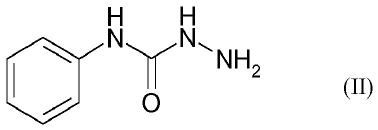 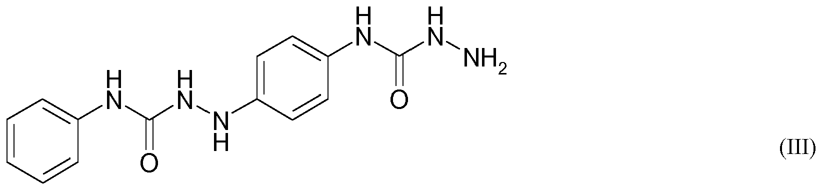 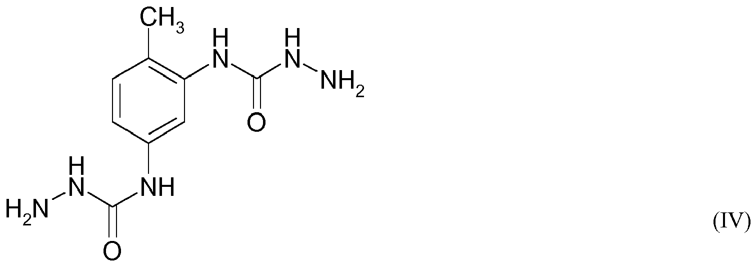 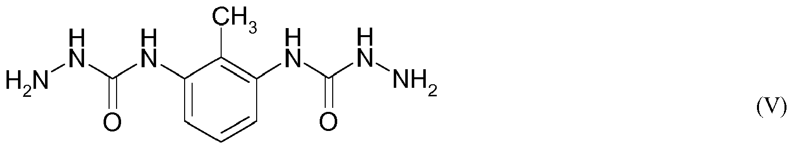 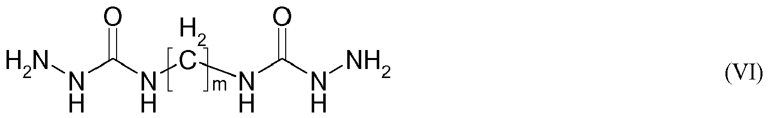 wherein in formula (VI) m denotes an integer from 1 to 16, 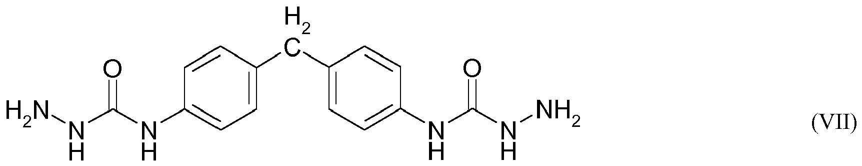 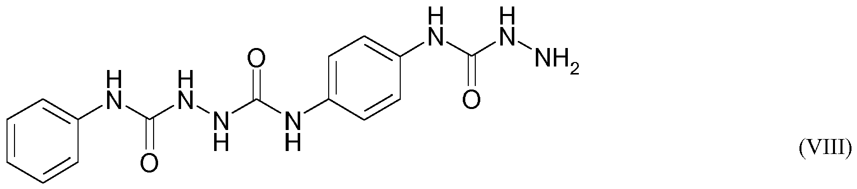 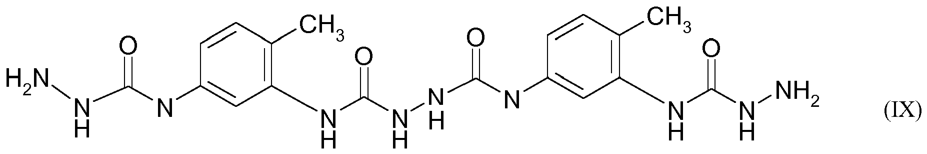 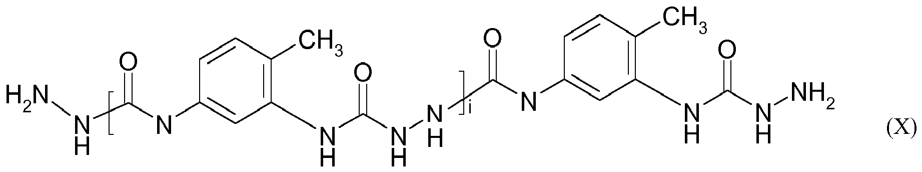 wherein in formula (X) i denotes an integer from 2 to 100,000.

## Revendications

1. Procédé pour la production de mousses de polyuréthane à émission réduite de formaldéhyde, par réaction
A1 de composés comportant des atomes d'hydrogène réactifs vis-à-vis d'isocyanates, ayant une masse moléculaire de 400 - 15 000,
A2 éventuellement de composés comportant des atomes d'hydrogène réactifs vis-à-vis d'isocyanates, ayant une masse moléculaire de 62 - 399,
A3 d'eau et/ou d'agents porogènes physiques,
A4 éventuellement d'adjuvants et additifs,
A5 de composés comportant au moins un groupe semicarbazide, avec
B des di- ou polyisocyanates.

2. Procédé selon la revendication 1, dans lequel la quantité utilisée du composant A5 par rapport à 100 parties en poids des composants A1 à A4 vaut de 0,1 à 10 parties en poids.

3. Procédé selon la revendication 1 pour la production de mousses de polyuréthane à émission réduite de formaldéhyde, par réaction
d'un composant A contenant
A1 75 à 99,5 parties en poids (par rapport à la somme des parties en poids des composants A1 à A4) de composés comportant des atomes d'hydrogène réactifs vis-à-vis d'isocyanates, ayant une masse moléculaire de 400 - 15 000,
A2 0 à 10 parties en poids (par rapport à la somme des parties en poids des composants A1 à A4) de composés comportant des atomes d'hydrogène réactifs vis-à-vis d'isocyanates, ayant une masse moléculaire de 62 - 399,
A3 0,5 à 25 parties en poids (par rapport à la somme des parties en poids des composants A1 à A4) d'eau et/ou d'agents porogènes physiques,
A4 0 à 10 parties en poids (par rapport à la somme des parties en poids des composants A1 à A4) d'adjuvants et additifs comme
A5 0,1 à 10 parties en poids (par rapport à la somme des parties en poids des composants A1 à A4) de composés comportant au moins un groupe semicarbazide,
avec un composant B contenant des di- ou polyisocyanates,
la production s'effectuant à un indice de 50 à 250.

4. Procédé selon l'une quelconque des revendications 1 à 3, dans lequel on utilise comme adjuvants et additifs (composant A4)
a) des catalyseurs,
b) des additifs agents de surface (tensioactifs), et
c) des additifs tels que des ralentisseurs de réaction, des régulateurs de cellules, des pigments, des colorants, des agents ignifuges, des stabilisants vis-à-vis des effets du vieillissement et des agents atmosphériques, des plastifiants, des substances à action fongistatique et bactériostatique, des charges et des agents de démoulage.

5. Procédé selon l'une quelconque des revendications 1 à 4, dans lequel on utilise comme catalyseurs
a) l'urée, les dérivés de l'urée mentionnés ci-dessus et/ou
b) également des amines aliphatiques tertiaires, des amines cycloaliphatiques tertiaires, des aminoéthers aliphatiques, des aminoéthers cycloaliphatiques, **caractérisé en ce que** les amines et aminoéthers contiennent un groupe réactif qui réagit chimiquement avec l'isocyanate.

6. Utilisation des composés comportant au moins un groupe semicarbazide (composant A5) dans des compositions de polyuréthane ou dans des procédés pour la production de mousses de polyuréthane, pour la réduction de l'émission de formaldéhyde.

7. Procédé selon l'une quelconque des revendications 1 à 5, **caractérisé en ce que** l'on utilise en tant que composés comportant au moins un groupe semicarbazide (composant A5), au moins l'un des composés selon les formules (II) à (X) 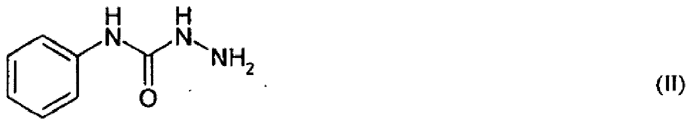 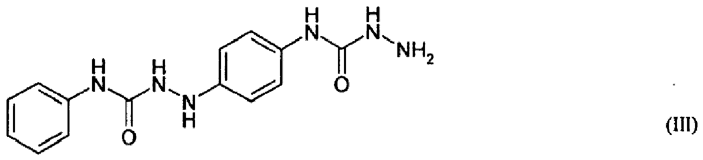 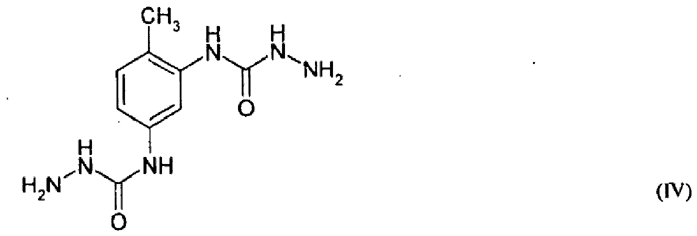 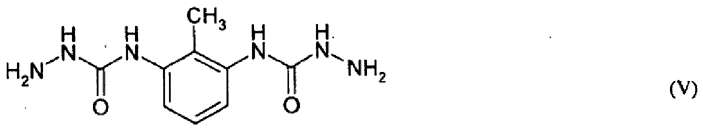 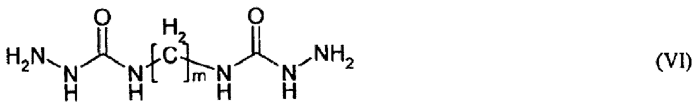 où, dans la formule (VI), m signifie un nombre entier de 1 à 16, 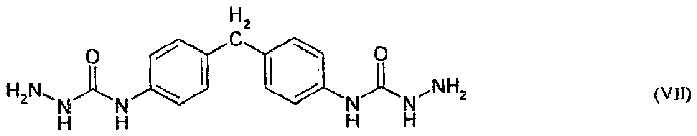 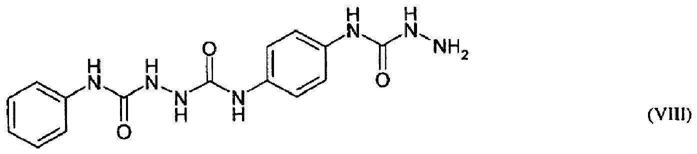 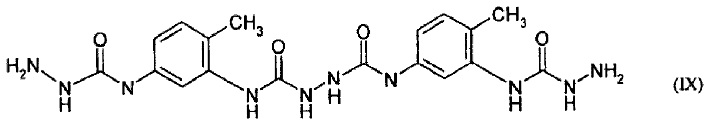 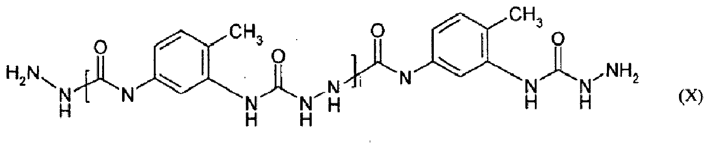 où, dans la formule (X), i signifie un nombre entier de 2 à 100 000.

8. Utilisation selon la revendication 6, **caractérisée en ce que** l'on utilise en tant que composés comportant au moins un groupe semicarbazide (composant A5), au moins l'un des composés selon les formules (II) à (X) 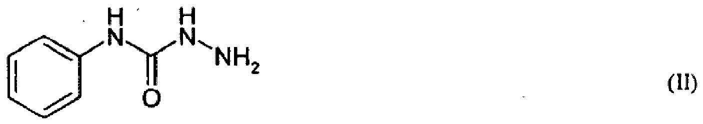 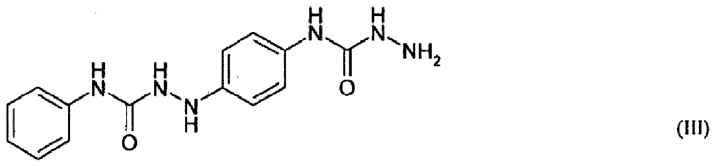 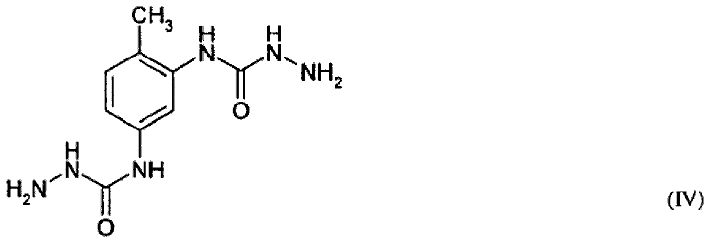 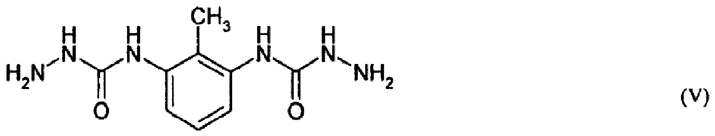 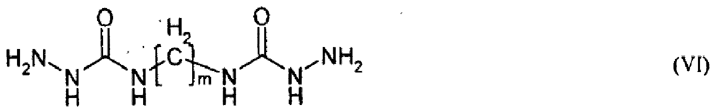 où, dans la formule (VI), m signifie un nombre entier de 1 à 16, 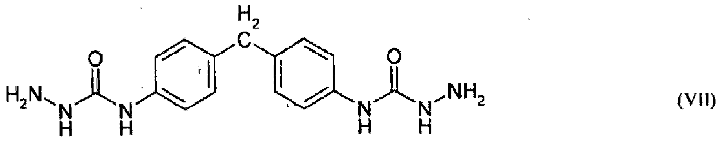 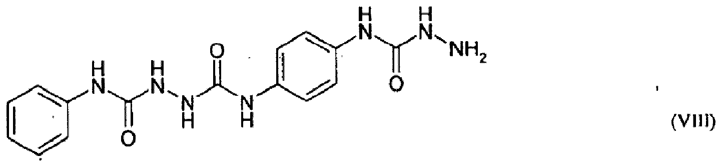 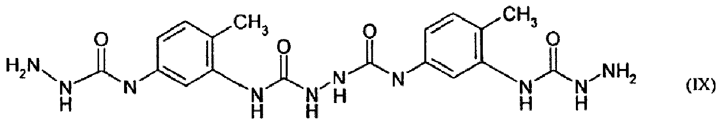 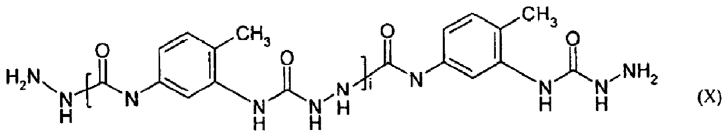 où, dans la formule (X), i signifie un nombre entier de 2 à 100 000.
